# EUROPEAN PATENT APPLICATION

(11) **EP 2 323 082 A1**
(43) Date of publication of application: **18.05.2011**
(21) Application number: 09305962.4
(22) Date of filing: 09.10.2009
(51) Int. Cl.: G06Q 10/00

(54) **Seat allocation to passengers on an aircraft**

(71) Applicant: Amadeus S.A.S., 06410 Biot (FR)
(72) Inventor: Debarge, Anthony, 06410 Biot (FR); Barillec, Vincent, 06410 Biot (FR)
(74) Representative: Decobert, Jean-Pascal

(57) **Abstract**

A customer seating system for allocating seats to a group of customers, adapted to
- Calculate a satisfaction value for each available seat, for each customer

**Characterized in, that** said system is further adapted to
- Compute a global satisfaction value for each seat, said global satisfaction value is the sum of the previously calculated satisfaction values for the customers of the group,
- Provide seating arrangements according to one of the predetermined geometrical shapes corresponding to the group,
- Determine the group of seats matching said predetermined shape that gives the maximum average global satisfaction value,
- Assign the corresponding seats to the group of customers.

## Description

The present invention relates to a customer seating system for allocating seats to a group of customers using a computer system. More specifically, the invention relates to a customer seating system for allocating seats to a group of passengers into a cabin of an airplane or similar using a computer system, while maximizing the requirement to the airplane and the preferences of the customers.

In the field of aerial transportation, the appointment of seats to passengers onboard an aircraft took once place by a manual assignment by an employee. The criteria essentially used by the employee to carry out this appointment of seats are the distribution of weight within the aircraft and taking into account on a case by case basis, the preferences and value of the passengers. An automated system was needed to optimize the efficiency of the seating allocation.

Today, automated reservation systems for seat allocation are well-known from for example publication number W02004010349. This document teaches how a computerized system can allocate seats to passengers, while taking their preferences and the requirements of the airplane as weight distribution into account. That way, each passenger reserving a seat onboard an aircraft will automatically be assigned a seat according to the preferences he inputted and the aircrafts capacity and other requirements, such as security requirements.

A system like the above-described system, works well for individual passengers. However, when several passengers are travelling together as a group, specific seating is needed. It is for example preferred to place the group together when possible. Also different passengers being part of that group might have different preferences.

So far, aerial transportation companies still rely on seat allocation by manual assignment by an employee when it comes to seat allocation for a whole group of passengers with individual needs as well as preferences as a group.

There is therefore a need to provide an automated computerized system that is configured to allocate seats for groups of costumers, while taking their preferences as individuals and as a group into account, and further while respecting the requirements such as weight distribution of the specific aircraft.

It is the purpose of the present invention to provide such a system.

In a more specific manner, the present invention relates to a customer seating system for allocating seats to a group of customers, adapted to
- order the customers by value, and process them sequentially
- calculate a satisfaction value for each available seat, for each customer,
- compute a global satisfaction value for each seat, said global satisfaction value is the sum of the previously calculated satisfaction values for the customers of the group,
- provide seating arrangements according to one of the predetermined geometrical shapes corresponding to the group,
- determine the group of seats matching said predetermined shape that gives the maximum average global satisfaction value, and
- assign the corresponding seats to each customer of the group.

It further relates to a customer seating system as defined above, where said satisfaction value is calculated using several criteria. These criteria may be one or more but not limited to the following:
- Customer preferences, giving the customer the option to choose between window seat or aisle seat for example.
- Target areas, defining an area where the customer should be seated. This allows grouping customers of same characteristics (value, booking class ...) in same areas.
- Suitability, telling if a seat is suitable for a customer depending on his characteristics. There are two types of suitability criteria: the passenger to seat suitability, and the passenger to passenger suitability. A criterion can be defined optional or mandatory. The interface of the system allows the definition of about thirty different types of passengers (wheelchair, unaccompanied minor, child ...) and forty types of seats (exit row, close to lavatory, bulkhead ...).
- Multiple legs, based on that a same seat should be assigned in case of a trip involving multiple sections with no change of aircraft between the sections.
- Group linking, placing passengers travelling in a group as close to each other as possible.
- Courtesy, keeping a seat free next to high valued customers when possible.

One of the main features of the present invention is how to seat a group of customers. According to the invention, passengers in a group will not be considered as individuals, but as a whole unit. This is possible by introducing geometrical seating patterns or "shapes", which may be predefined in the seating allocation system.

Hence, the geometrical shapes corresponding to the number of customer seats required for a group are selected from a set of predetermined geometrical shapes.

There is for each number of customers in a group, a certain number of possible geometric shapes.

The predetermined geometrical shapes may have a ranking order, defining which shape is preferred. This preference can be configurable and even be aircraft or cabin dependent.

Thereby the highest ranked geometrical shape amongst the available geometrical shapes corresponding to the number of customer seats required for a group is selected first.

If the highest ranked geometrical shape amongst the available geometrical shapes corresponding to the number of customer seats required for a group is not suitable, then the next shape in the ranking order is selected and so forth. By a suitable shape, we mean the highest ranked geometrical shape that can physically fit with regards to free seats, and which fulfills the above listed criteria.

With none of the highest ranked geometrical shapes being suitable due to for example lack of available adjacent seats, a lower ranked shape may actually be a sum of two smaller shapes separated from each other. This way, every customer from a group will still be seated next to another customer from the same group, even though the group is split into two or more smaller groups.

Also, the maximum number of customers in a group is preferably limited to a predetermined number, for example 9. A group having more than 9 customers may be split up in two or more smaller groups.

The present invention further comprises a method for allocating seats to a group of customer comprising the steps of:
- order the customers by value, and process them sequentially,
- Calculating a satisfaction value for each available seat, for each customer,
- Computing a global satisfaction value for each seat, said global satisfaction value is the sum of the previously calculated satisfaction values for the customers of the group,
- Providing seating arrangements according to one of the predetermined geometrical shapes corresponding to the group,
- Determining the group of seats matching said predetermined shape that gives the maximum average global satisfaction value,
- Assigning the corresponding seats to the group of customers.

Also the invention describes a terminal comprising:
- a user interface for inputting and outputting data,
- a database and memory for storing data,
- a processor for processing data,
- further comprising the customer seating system described above. The terminal may furthermore communicate with a local or remote server.

The present invention will now be described in details with reference to the drawings for the purpose of illustrating the preferred embodiment.

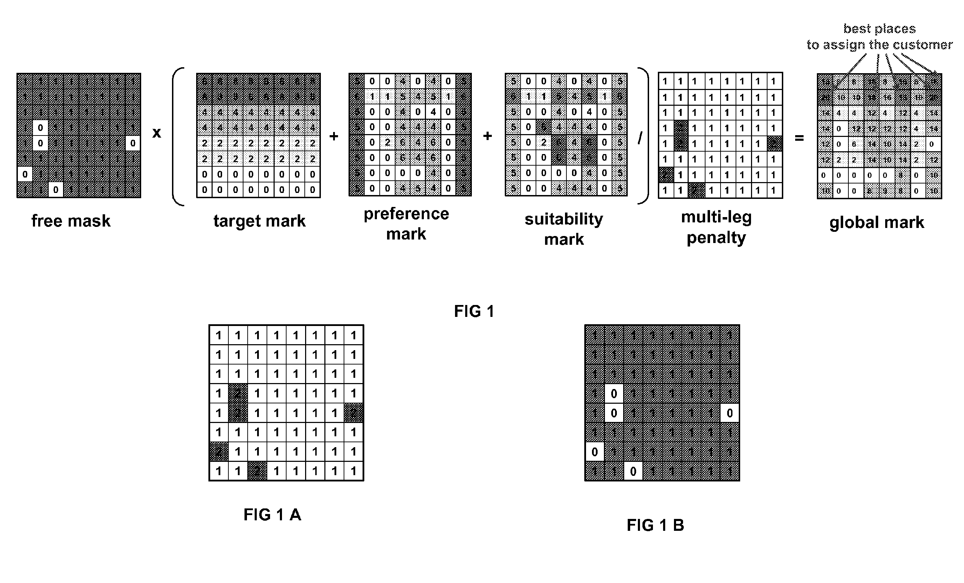

Fig 1 is a schematic view showing how customer satisfaction value is determined for each seat.
FIG 1 a and 1 b is a schematic view showing the criterion of multi-leg.
Fig 2 is a schematic view showing how a group of customers is seated according to the invention.
Fig 3 is a schematic view showing how a best seating "shape" is placed.

The following description is applicable to a reservation of seats for aircraft travel, onboard an airplane. However, this application is not limiting and the invention could be used for any other technical sector in which a reservation of places is necessary.

Figure 1 shows the criteria taken into account by the seat allocation system when seating a single passenger onboard an airplane. Each matrix in figure 1 represents the cabin in the airplane and each box represents a seat.

The matrix "free mask" shows available seats. This group of available seats is defined by subtracting the seats considered as unavailable, including those for which the reservation is confirmed, from the total number of seats. Seats can also be considered as unavailable for other reasons, in particular if they cannot be used in the course of a flight. The seats marked with a "0" in the figure are not available. In practice, if a passenger has confirmed his reservation, the seat allocated to him is thus considered as unavailable. This is particularly the case when he has already checked in and has a boarding pass with a published seat number.

The next matrices or "marks" define different preferences and criteria accommodating the passenger's wishes as well as the rules of the airplane.

For each rule to be respected, a value is determined as a function of the correspondence to the placement criteria for a given passenger in each seat. Each seat will then have a passenger satisfaction value for each rule. These values are added together for each seat and a global mark representing available seats with all rules taken into account is provided. The highest value is translated to the best seat to assign to that given passenger.

The user interface allows these criteria to define different levels of importance and the calculation will thus be more difficult as a result. The user gives thus a particular weight to each criterion, it can be for example:

| Customer preferences | Target areas | Suitability | Multiple legs | Group linking | Courtesy |
|---|---|---|---|---|---|
| 9 | 5 | 8 | 1 | 9 | 2 |

The multiple-leg penalty applies when a passenger travel on several sections (for example: Nice -> Paris - Paris -> Berlin) and the aircraft is the same for those sections. The goal is to avoid that a customer has to move from a seat to another between the sections of his trip. See Fig. 1.

A seat available in section can be already occupied in the other sections. To ensure that such a seat won't get a good mark, we penalize it in dividing its score by two. For example, a multiple-legs penalty looking like shown in Fig. 1 and Fig. 1a.

for the section Nice -> Paris, would mean that the free mask for the section Paris -> Berlin would be as shown in Fig. 1 b.

This seat allocation system only works on one single passenger at a time. This is different for a group of passengers, where passengers willing to travel in group should be seated next to the other group members as much as can be.

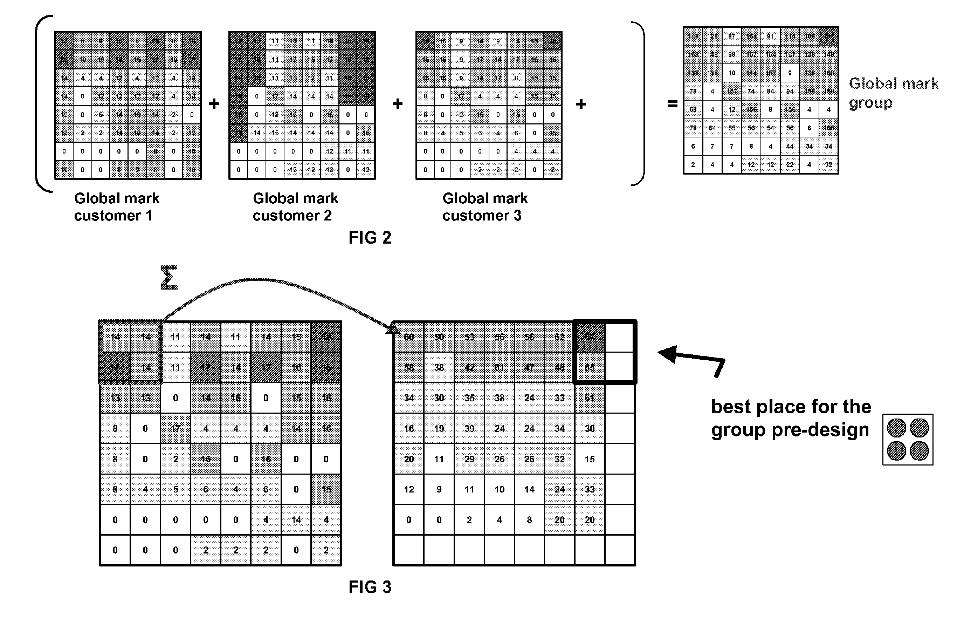

To allocate seats for a group of passengers according to the invention, the global mark for each passenger from the group is calculated according to figure 1. Thereafter, all the global marks (one for each passenger in the group) are added together to define a global group mark as shown in figure 2.

With the global group mark computed, the group can be seated according to their criteria, availability and the rules of the airplane.

To assign seats to a group, different predesigned seating shapes have been defined and stored in the system.

For example for a group of 4 passengers, the following good shapes are tried by the system 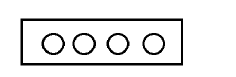 Or

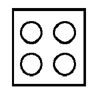

The line shape may be preferred to the square shape. This remains configurable and may even be aircraft or cabin dependent.

Obviously, there is a certain number of predefined shapes for each number of passengers forming a group. The shapes have a ranking order, where the highest ranked shape always will be chosen if suitable in terms of seat availability.

If none of the highest ranked shapes are suitable, alternative shapes are tried. In our previous example with a group of 4 members, if the line and square shapes are not suitable due to lack of available seats in that configuration, the next shape in the ranking order to be tried may be

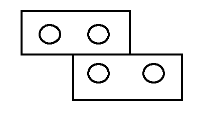

As a last resort, if none of the shapes are suitable due to for example lack of available adjacent seats, the group can be split up into smaller groups such as 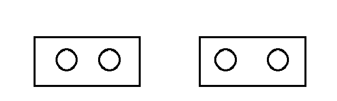 until a suitable shape is found.

Let's assume the square shape in the above example is suitable.

In figure 3 the global mark group in shown on the right. To compute the best position for the square shape, an average mark is calculated by summing the marks contained inside the shape in every position in the cabin matrix. The resulting matrix is shown in figure 3, left matrix.

By positioning the shape in the left corner to perform the first calculation, it is clear to see that the sum is 14+14+14+18=60.

The second calculation comes from moving the shape one position to the right having a total mark of 14+11+14+11=50, as indicated in the left matrix at the second position (from the top left corner). And so forth, until computing sums for the whole global group mark matrix.

The highest value is in this example 67, which will therefore be the position of the square shape.

After the best shape has been found and placed, the final step of the system is to assign individually each passenger of the group inside the best shape, on the seat having the maximum satisfaction value.

To proceed according to the invention, computer means may be used. These means comprise data storage means for storing databases such as a database of predefined geometrical shapes, and particularly a computer database as well as processing means in the form of a processor. A communication network may or may not be available. All the data accessed may be stored on the terminal itself or on a remote server.

## Claims

1. A customer seating system for allocating seats to a group of customers, adapted to
- Calculate a satisfaction value for each available seat, for each customer
**Characterized in, that** said system is further adapted to
- Compute a global satisfaction value for each seat, said global satisfaction value is the sum of the previously calculated satisfaction values for the customers of the group,
- Provide seating arrangements according to one of the predetermined geometrical shapes corresponding to the group,
- Determine the group of seats matching said predetermined shape that gives the maximum average global satisfaction value,
- Assign the corresponding seats to the group of customers.

2. A customer seating system according to claim 1, where said satisfaction value is calculated using several criteria such as customer preferences, target, suitability, multi legs, courtesy.

3. A customer seating system according to any of the preceding claims, where a plurality of geometrical shapes corresponding to the number of customers seats required for a group, are processed sequentially to find the most suitable one.

4. A customer seating system according to any of the preceding claims, where the geometrical shape corresponding to the number of customer seats required for a group, is selected from a set of predetermined geometrical shapes.

5. A customer seating system according to any of the preceding claims, where a geometrical shape is selected amongst available geometrical shapes corresponding to the number of customer seats required for a group according to a predetermined ranking order.

6. A customer seating system according to claim 5, where the highest ranked geometrical shape amongst the available geometrical shapes corresponding to the number of customer seats required for a group is selected first.

7. A customer seating system according to claim 6, where the next geometrical shape according to the ranking order is selected if the highest ranked geometrical shape amongst the available geometrical shapes corresponding to the number of customer seats required for a group is not suitable.

8. A customer seating system according to claim 1 to 7, where said system repeatedly will split the group into two smaller groups, until the whole group is assigned, If no shape is found suitable.

9. A method for allocating seats to a group of customer comprising the steps of:
- Calculating a satisfaction value for each available seat, for each customer,
- Computing a global satisfaction value for each seat, said global satisfaction value is the sum of the previously calculated satisfaction values for the customers of the group,
- Providing seating arrangements according to one of the predetermined geometrical shapes corresponding to the group,
- Determining the group of seats matching said predetermined shape that gives the maximum average global satisfaction value,
- Assigning the corresponding seats to the group of customers.

10. A terminal comprising
a user interface for inputting and outputting data,
a memory and database for storing data,
a processor for processing data,
further comprising the customer seating system of any of claims 1 to 8.

11. A terminal according to claim 10, where said terminal communicates with a remote server.

12. A computer program configured to perform the steps of claim 9.
